# EUROPÄISCHE PATENTSCHRIFT

(11) **EP 2 179 881 B1**
(45) Veröffentlichungstag und Bekanntmachung des Hinweises auf die Patenterteilung: **04.01.2012**
(21) Anmeldenummer: 09012172.4
(22) Anmeldetag: 25.09.2009
(51) Int. Cl.: B60K 17/22, B60K 17/04, B60K 17/346, F41H 7/00

(54) **Kraftfahrzeug mit Allradantrieb**
Motor vehicle with all-wheel drive
Véhicule automobile doté d'un entraînement toute roue

(30) Priorität: 17.10.2008 DE 102008052072
(43) Veröffentlichungstag der Anmeldung: 28.04.2010
(73) Patentinhaber: Rheinmetall Landsysteme GmbH, 24107 Kiel (DE)
(72) Erfinder: Hass, Frank, 24325 Wendtorf (DE)
(74) Vertreter: Dietrich, Barbara

(56) Entgegenhaltungen:
- DE-A1- 4 240 986
- DE-A1- 19 631 715
- US-A- 2 298 334

## Beschreibung

Die Erfindung betrifft ein Kraftfahrzeug mit Allradantrieb, welches eine in Längsrichtung des Kraftfahrzeuges zwischen Vorder- und Hinterrädern angeordnete, die Besatzung aufnehmende Fahrgastzelle sowie einen Antriebsmotor und ein Schaltgetriebe umfasst, wobei der Antriebsmotor und das Schaltgetriebe voneinander getrennt in sogenannte Transaxle-Bauweise über eine sich in Längsrichtung erstreckende erste Welle miteinander verbunden sind, und wobei zur Verteilung der Antriebskraft zwischen Schaltgetriebe und Rädern eine ebenfalls in Längsrichtung des Fahrzeuges verlaufende zweite Welle vorgesehen ist.

Ein derartiges Fahrzeug ist beispielsweise aus der gattungsgemäßen DE 42 40 986 A1 bekannt. Bei diesem bekannten Fahrzeug sind Antriebsmotor und Schaltgetriebe durch eine erste starre Welle miteinander verbunden, die in der Regel bodenseitig unterhalb der Fahrgastzelle verläuft. Die zweite Welle ist als Hohlwelle ausgebildet und umgibt die erste Welle koaxial.

Bei einer Verwendung einer derartigen Motor-Getriebeanordnung bei einem gepanzerten Radfahrzeug, wie es etwa aus der DE 10 2004 006 819 B4 bekannt ist, ergibt sich das Problem, dass beide Wellen bei der Explosion von Bodenminen leicht zerstört werden können.

Die US 2,298,334 A betrifft ein Fahrzeug mit Hinterradantrieb, wobei die Antriebswellen für die hinteren Räder leicht außermittig geführt sind, um somit die Möglichkeit zu schaffen, den Tank des Fahrzeugs wunschgemäß gegen den Boden abzusenken, d.h., dessen Volumen zu vergrößern.

Der Erfindung liegt die Aufgabe zugrunde, bei Fahrzeugen der eingangs erwähnten Art eine Beschädigung oder Zerstörung der ersten und zweiten Welle insbesondere durch explodierende Bodenminen zu vermeiden.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im Wesentlichen auf dem Gedanken, die beiden Wellen nicht koaxial unterhalb der Fahrgastzelle zu verlegen, sondern getrennt voneinander an den gegenüberliegenden Seitenwänden der Fahrgastzelle entlangzuführen, da diese Bereiche bei der Explosion einer Bodenmine wesentlich weniger gefährdet sind als der Bereich unterhalb der Fahrgastzelle.

Dabei wird der Antriebsmotor vorzugsweise zwischen den Hinterrädern angeordnet, wobei ein erstes Versatzgetriebe den Achsversatz zur seitlich neben der Fahrgastzelle laufenden ersten Welle überbrückt. Im Bereich der Vorderachse ist ein zweites Versatzgetriebe vorgesehen, das die gleichen Zahnräderpaare verwendet wie das erste Versatzgetriebe und das Antriebsmoment des Motors in das zwischen den Vorderrädern befindliche Schaltgetriebe einleitet. Vom Schaltgetriebe aus wird die Kraft zur Vorderachse über ein Zwischengetriebe zu einem Achsmittengetriebe und zu einem dritten Versatzgetriebe geleitet. Dieses dritte Versatzgetriebe überbrückt den Achsversatz zu der an der anderen Seitenwand der Fahrgastzelle verlaufenden zweiten Welle, die über ein viertes, im Bereich der Hinterachse angeordnetes Versatzgetriebe ein Achsmittengetriebe der Hinterachse antreibt.

Selbstverständlich kann auch vorgesehen werden, dass der Antriebsmotor zwischen den Vorderrädern und das Schaltgetriebe im Bereich der Hinterräder angeordnet wird. Auch in diesem Fall werden vier Versatzgetriebe benötigt, um eine seitliche Anordnung der beiden Wellen sicherzustellen.

Zur Entlastung der beiden Wellen kann deren Drehzahl über die Versatzgetriebe erhöht werden. Wie sich gezeigt hat, kann hierzu bei Verwendung von Stirnradgetrieben die Anzahl der Stirnräder pro Versatzgetriebe in der Regel auf drei begrenzt werden, um die notwendige Über- bzw. Untersetzung des jeweiligen Versatzgetriebes zu erreichen.

Um kompakte Getriebeeinheiten zu erhalten, werden die beiden Versatzgetriebe an der Vorderachse und an der Hinterachse vorzugsweise jeweils von einem gemeinsamen Gehäuse umschlossen.

Um Freiraum für die gelenkten Vorderräder zu erhalten, ohne die vorderen Versatzgetriebe zu weit hinter die Vorderachse bauen zu müssen, kann das vordere (Doppel-) Versatzgetriebe gegenüber dem hinteren (Doppel-) Versatzgetriebe höhenversetzt angeordnet sein, so dass die beiden Wellen einen von vorne nach hinten abfallenden schrägen Verlauf aufweisen.

Alternativ kann vorgesehen werden, dass durch die beiden Wellen auch zusätzliche Nebenaggregate (beispielsweise ein Klimakompressor) angetrieben werden.

Als besonders vorteilhaft hat es sich erwiesen, wenn zwischen den beiden, dem Antriebsmotor benachbarten Versatzgetrieben ein zuschaltbares Zwischengetriebe (Notfahrgetriebe) eingebaut wird, welches nach dem Zuschaltvorgang von dem ersten Versatzgetriebe angetrieben und direkt auf das Achsmittengetriebe der dem Antriebsmotor benachbarten Radachse (beispielsweise der Hinterachse) wirkt. Dieses Getriebe dient im Falle der Zerstörung oder Beschädigung einer der beiden Wellen oder des Schaltgetriebes zu deren Überbrückung und gewährleistet ein Fahren des Kraftfahrzeuges im Notfall. Vorzugsweise wird dabei die Übersetzung des Notfahrgetriebes als Rückwärts-Kriechgang ausgelegt.

Weitere Einzelheiten und Vorteile der Erfindung ergeben sich aus den folgenden, anhand von Figuren erläuterten Ausführungsbeispielen. Es zeigen:
- Fig. 1: die perspektivische Ansicht eines erfindungsgemäßen Kraftfahrzeuges schräg von vorne mit Fahrgastzelle, aber ohne Abdeckungen des vorderseitig angeordneten Schaltgetriebes und des heckseitig angeordneten Antriebsmotors;
- Fig. 2: das in Fig.1 dargestellte Kraftfahrzeug ohne Fahrgastzelle;
- Fig. 3: eine schematische Draufsicht auf das in Fig.2 dargestellte Kraftfahrzeug und
- Fig. 4: eine schematische Darstellung eines im heckseitigen Bereich des Kraftfahrzeuges angeordneten Notfahrgetriebes.

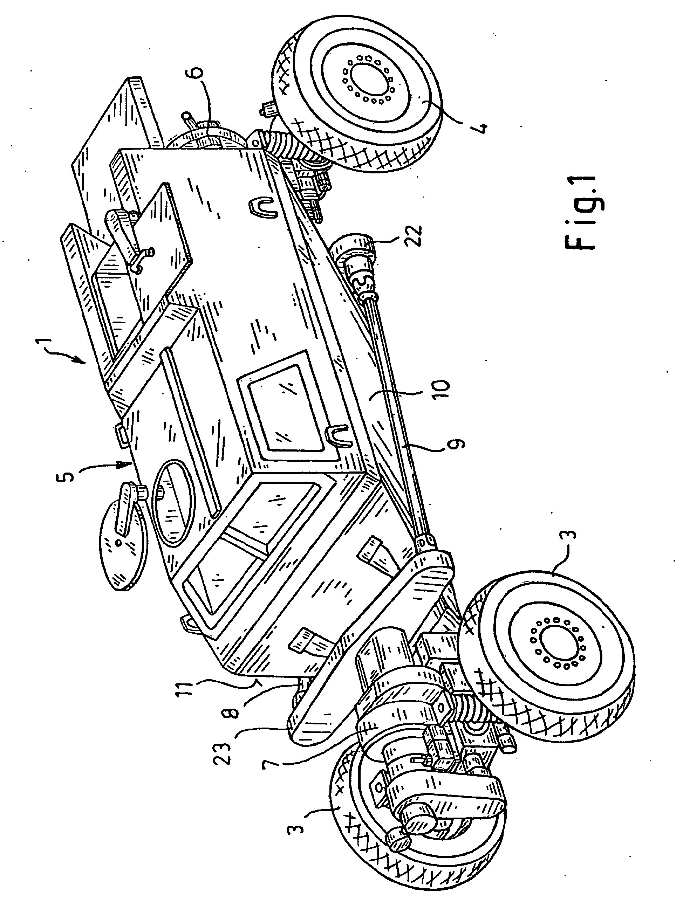

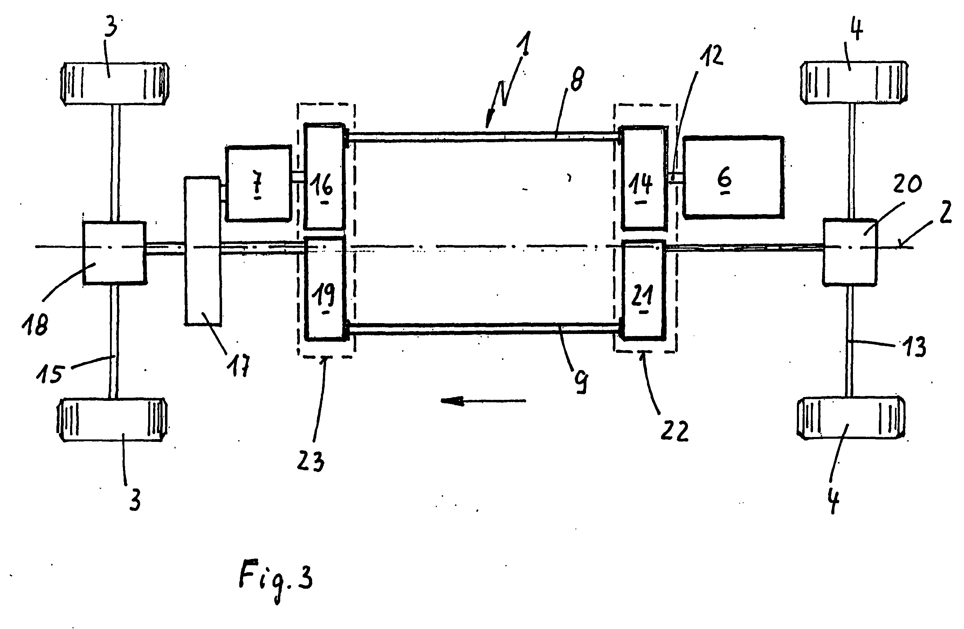

In den Fig.1-3 sind mit 1 ein erfindungsgemäßes Kraftfahrzeug mit Allradantrieb bezeichnet, welches eine in Richtung seiner Längsachse 2 (Fig. 3) zwischen Vorderrädern 3 und Hinterrädern 4 angeordnete, die Besatzung aufnehmende Fahrgastzelle 5 (Fig. 1) umfasst. Außerdem sind heckseitig zwischen den beiden Hinterrädern 4 ein Antriebsmotor (in der Regel ein Dieselmotor) 6 und frontseitig zwischen den Vorderrädern 3 ein Schaltgetriebe 7 angeordnet. Dabei sind der Antriebsmotor 6 und das Schaltgetriebe 7 in sogenannte Transaxle-Bauweise über eine sich in Richtung der Längsachse 2 erstreckende erste Welle 8 miteinander verbunden. Außerdem ist zur Verteilung der Antriebskraft zwischen Schaltgetriebe 7 und Hinterrädern 4 eine ebenfalls in Richtung der Längsachse 2 des Kraftfahrzeuges 1 verlaufende zweite Welle 9 vorgesehen.

Erfindungsgemäß verlaufen die beiden Wellen 8, 9 nicht wie bei bekannten Kraftfahrzeugen unterhalb der Fahrgastzelle 5, sondern entlang der beiden gegenüberliegenden Seitenwänden 10, 11 der Fahrgastzelle 5.

Zur Überbrückung des Achsversatzes zwischen der Abtriebswelle 12 des Antriebsmotors 6 und der ersten Welle 8 ist im Bereich der die Hinterräder 4 tragenden Hinterachse 13 ein erstes Versatzgetriebe 14 (beispielsweise Stirnradgetriebe) vorgesehen, und zur Überbrückung des Achsversatzes zwischen der ersten Welle 8 und dem Schaltgetriebe 7 ist im Bereich der die Vorderräder 3 tragenden Vorderachse 15 ein zweites Versatzgetriebe 16 (beispielsweise Stirnradgetriebe mit gleichem Aufbau wie das erste Versatzgetriebe) angeordnet.

Das Schaltgetriebe 7 ist sowohl über ein Zwischengetriebe 17 mit einem Achsmittengetriebe 18 der Vorderachse 15 als auch über ein im Bereich der Vorderachse 15 angeordnetes drittes Versatzgetriebe 19 (beispielsweise Stirnradgetriebe) zur Überbrückung des Versatzes zwischen der zweiten Welle 9 und der Abtriebswelle des Zwischengetriebes 17 verbunden.

Zur Überbrückung des Achsversatzes zwischen der zweiten Welle 9 und einem Achsmittengetriebe 20 der Hinterachse 13 ist ein viertes Versatzgetriebe 21 (beispielsweise Stirnradgetriebe) im Bereich der Hinterachse 13 des Kraftfahrzeuges 1 angeordnet.

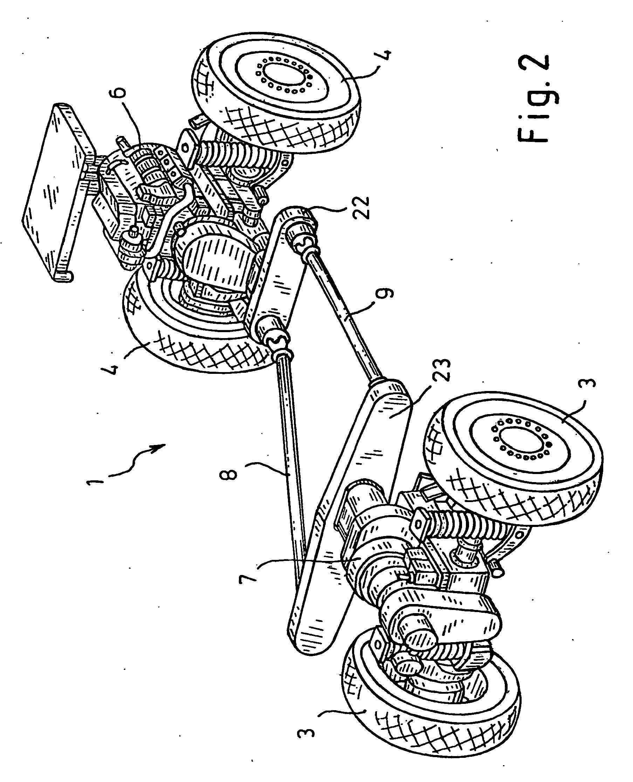

Wie den Fig. 1 und 2 entnehmbar ist, sind zur Gewinnung von Freiraum für die lenkbaren Vorderräder 3 die im Bereich der Vorderachse 15 befindlichen Versatzgetriebe 16 und 19 gegenüber den im Bereich der Hinterachse befindlichen Versatzgetrieben 14 und 21 höhenversetzt angeordnet.

Zur Entlastung der ersten und zweiten Welle 8 und 9 weisen das erste und dritte Versatzgetriebe 14 und 19 Übersetzungen auf, die gegenüber der Abtriebswelle 12 des Antriebsmotors 6 und des Schaltgetriebes 7 eine Drehzahlerhöhung der ersten und zweiten Welle 8 und 9 ergibt, wobei diese Drehzahlerhöhung durch das zweite und vierte Versatzgetriebe 16 und 21 dann wieder rückgängig gemacht werden.

Wie den Fig. 1 und 2 entnommen werden kann, sind die beiden Versatzgetriebe 14 und 21 im Bereich der Vorderachse 15 sowie die beiden Versatzgetriebe 16 und 19 im Bereich der Hinterachse 13 jeweils in einem gemeinsamen Getriebegehäuse 22, 23 angeordnet.

Bei einer weiteren Ausführungsform der Erfindung ist in dem Getriebegehäuse 23 zwischen den beiden Versatzgetrieben 14 und 21 ein zuschaltbares Zwischengetriebe 24 (beispielsweise Stirnradgetriebe) angeordnet, welches direkt auf das Achsmittengetriebe 18 der Hinterachse wirkt. Dieses Getriebe dient im Falle der Zerstörung oder Beschädigung einer der beiden Wellen 8, 9 oder des Schaltgetriebes 7 zu deren Überbrückung und gewährleistet ein Fahren des Kraftfahrzeuges 1 im Notfall. Vorzugsweise wird die Übersetzung des Notfahrgetriebes als Rückwärts-Kriechgang ausgelegt.

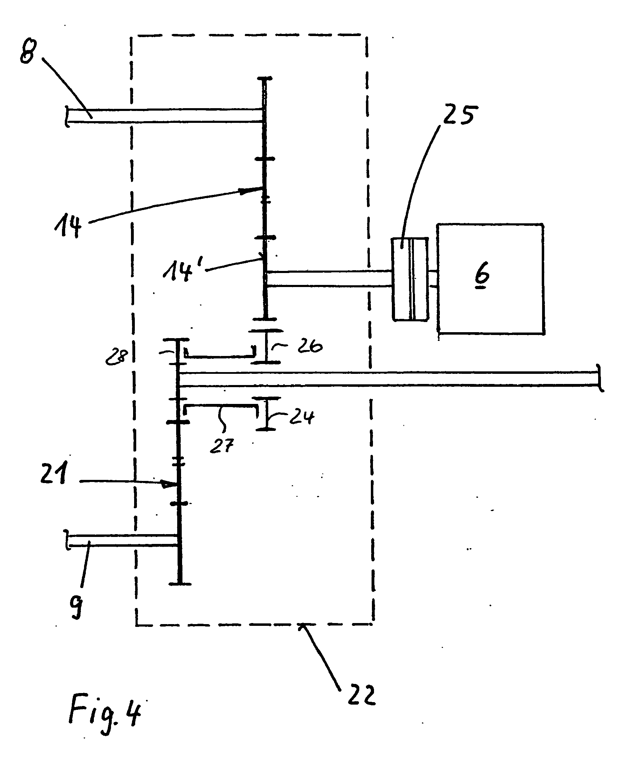

In Fig. 4 ist eine entsprechende Getriebeanordnung dargestellt, wobei das mit 24 bezeichnete Zwischengetriebe sich in der entkoppelten Position befindet (die gestrichelte Darstellung deutet die zugeschaltete Position des Zwischengetriebes an). Dabei sind der Antriebsmotor wiederum mit 6 und die Versatzgetriebe mit 14 und 21 bezeichnet. Vorzugsweise ist zwischen dem Antriebsmotor 6 und dem ersten Versatzgetriebe 14 eine elastische Kupplung 25 angeordnet.

Die Versatzgetriebe 14 und 21 sind jeweils als dreistufige Stirnradgetriebe und das Zwischengetriebe 24 als ein beispielsweise zweistufiges Stirnradgetriebe ausgebildet.

Soll in einem Notfall nun das Zwischengetriebe 24 zugeschaltet werden, wird über eine Schiebemuffe 27 ein zusätzliches Zahnrad 26 ein- und das Zahnrad 28 ausgekoppelt. Vorzugsweise werden dabei in bekannter Art und Weise im Getriebe Synchronringe verwendet, die das Schalten bei laufendem Motor ermöglichen.

### Bezugszeichenliste

- 1: Kraftfahrzeug
- 2: Längsachse
- 3: Vorderräder
- 4: Hinterräder
- 5: Fahrgastzelle
- 6: Antriebsmotor
- 7: Schaltgetriebe
- 8: (erste) Welle
- 9: (zweite) Welle
- 10,11: Seitenwände
- 12: Abtriebswelle
- 13: Radachse, Hinterachse
- 14: (erstes) Versatzgetriebe
- 14': Zahnrad
- 15: Radachse, Vorderachse
- 16: (zweites) Versatzgetriebe
- 17: Zwischengetriebe
- 18: Achsmittengetriebe
- 19: (drittes) Versatzgetriebe
- 20: Achsmittengetriebe
- 21: (viertes) Versatzgetriebe
- 22,23: Getriebegehäuse
- 24: Zwischengetriebe
- 25: elastische Kupplung

## Patentansprüche

1. Kraftfahrzeug mit Allradantrieb, welches eine in Richtung der Längsachse (2) des Kraftfahrzeuges (1) zwischen Vorderrädern (3) und Hinterrädern (4) angeordnete, die Besatzung aufnehmende Fahrgastzelle (5) sowie einen Antriebsmotor (6) und ein Schaltgetriebe (7) umfasst, wobei der Antriebsmotor (6) und das Schaltgetriebe (7) voneinander getrennt in sog. Transaxle-Bauweise über eine sich in Richtung der Längsachse (2) erstreckende erste Welle (8) miteinander verbunden sind, und wobei zur Verteilung der Antriebskraft zwischen Schaltgetriebe (7) und den Rädern (3, 4) eine ebenfalls in Richtung der Längsachse (2) des Fahrzeuges verlaufende zweite Welle (9) vorgesehen ist, **gekennzeichnet** mit den Merkmalen:
a) die beiden Wellen (8, 9) sind an gegenüberliegenden Seitenwänden (10, 11) der Fahrgastzelle (5) entlanggeführt;
b) zur Überbrückung eines Achsversatzes zwischen der Abtriebswelle (12) des Antriebsmotors (6) und der ersten Welle (8) ist ein erstes Versatzgetriebe (14) und zur Überbrückung eines Achsversatzes zwischen der ersten Welle (8) und dem Schaltgetriebe (7) ist ein zweites Versatzgetriebe (16) vorgesehen;
c) das Schaltgetriebe (7) ist sowohl über ein Zwischengetriebe (17) mit einem Achsmittengetriebe (18) der dem Schaltgetriebe (7) benachbarten Radachse (13, 15) als auch über ein drittes Versatzgetriebe (19) zur Überbrückung eines Versatzes zwischen der zweiten Welle (9) und der Abtriebswelle des Schaltgetriebes (7) oder des Zwischengetriebes (17) verbunden, und
d) zur Überbrückung eines Achsversatzes zwischen der zweiten Welle (9) und einem Achsmittengetriebe (20) der dem Antriebsmotor (6) benachbarten Fahrzeugachse (13, 15) ist ein viertes Versatzgetriebe (21) vorgesehen.

2. Kraftfahrzeug nach Anspruch 1, **dadurch gekennzeichnet, dass** das erste Versatzgetriebe (14) und/oder das dritte Versatzgetriebe (19) derart gewählt ist/sind, dass sich gegenüber der Abtriebswelle (12) des Antriebsmotors (6) und/oder des Schaltgetriebes (7) eine Drehzahlerhöhung der ersten Welle (8) und/oder der zweiten Welle (9) ergibt und dass diese Drehzahlerhöhung durch das zweite Versatzgetriebe (16) und/oder vierte Versatzgetriebe (21) rückgängig gemacht wird.

3. Kraftfahrzeug nach Anspruch 1 oder 2, **dadurch gekennzeichnet, dass** das erste Versatzgetriebe (14) und das vierte Versatzgetriebe (21) und/oder das zweite Versatzgetriebe (16) und dritte Versatzgetriebe (19) in einem gemeinsamen Getriebegehäuse (22, 23) angeordnet sind.

4. Kraftfahrzeug nach einem der Ansprüche 1 bis 3, **dadurch gekennzeichnet, dass** es sich bei den Versatzgetrieben (14, 16, 19, 21) um Stirnradgetriebe handelt.

5. Kraftfahrzeug nach einem der Ansprüche 1 bis 4, **dadurch gekennzeichnet, dass** zur Gewinnung von Freiraum bei lenkbaren Vorderrädern (3) die im Bereich der Vorderachse (15) befindlichen Versatzgetriebe (16, 19) gegenüber den im Bereich der Hinterachse (13) befindlichen Versatzgetriebe (14, 21) höhenversetzt angeordnet sind.

6. Kraftfahrzeug nach einem der Ansprüche 1 bis 5, **dadurch gekennzeichnet, dass** zwischen dem ersten Versatzgetriebe (14) und dem vierten Versatzgetriebe (21) ein zuschaltbares Zwischengetriebe (24) angeordnet ist, welches direkt auf das Achsmittengetriebe (20) der benachbarten Radachse (15) wirkt.

7. Kraftfahrzeug nach Anspruch 6, **dadurch gekennzeichnet, dass** es sich bei dem zuschaltbaren Zwischengetriebe (24) um ein Stirnradgetriebe handelt.

8. Kraftfahrzeug nach Anspruch 6 oder 7, **dadurch gekennzeichnet, dass** die Übersetzung des zuschaltbaren Zwischengetriebes (24) als Rückwärts-Kriechgang ausgelegt ist.

9. Kraftfahrzeug nach einem der Ansprüche 1 bis 8, **dadurch gekennzeichnet, dass** der Antriebsmotor (6) zwischen den Hinterrädern (4) und das Schaltgetriebe (7) zwischen den Vorderrädern (3) des Kraftfahrzeuges (1) angeordnet sind.

## Claims

1. Motor vehicle with all-wheel drive, said motor vehicle comprising a passenger cell (5), which is arranged between front wheels (3) and rear wheels (4) in the direction of the longitudinal axis (2) of the motor vehicle (1) and which accommodates the crew, and also comprising a drive engine (6) and a shift gearbox (7), wherein the drive engine (6) and the shift gearbox (7), separated from one another in a so-called transaxle design, are connected to one another by means of a first shaft (8) extending in the direction of the longitudinal axis (2), and wherein for the distribution of the drive force between the shift gearbox (7) and the wheels (3, 4), a second shaft (9) is provided which likewise runs in the direction of the longitudinal axis (2) of the vehicle, **characterized by** the features:
a) the two shafts (8, 9) are guided along opposite side walls (10, 11) of the passenger cell (5);
b) a first offset gearing (14) is provided to bridge an axis offset between the drive output shaft (12) of the drive engine (6) and the first shaft (8), and a second offset gearing (16) is provided to bridge an axis offset between the first shaft (8) and the shift gearbox (7);
c) the shift gearbox (7) is connected both via an intermediate gearing (17) to an axle centre gearing (18) of the wheel axle (13, 15) adjacent to the shift gearbox (7), and also via a third offset gearing (19) for bridging an offset between the second shaft (9) and the drive output shaft of the shift gearbox (7) or of the intermediate gearing (17), and
d) to bridge an axis offset between the second shaft (9) and an axle centre gearing (20) of the vehicle axle (13, 15) adjacent to the drive engine (6), a fourth offset gearing (21) is provided.

2. Motor vehicle according to Claim 1, **characterized in that** the first offset gearing (14) and/or the third offset gearing (19) are/is selected so as to yield a rotational speed increase of the first shaft (8) and/or of the second shaft (9) in relation to the drive output shaft (12) of the drive engine (6) and/or of the shift gearbox (7), and **in that** said rotational speed increase is cancelled by the second offset gearing (16) and/or fourth offset gearing (21).

3. Motor vehicle according to Claim 1 or 2, **characterized in that** the first offset gearing (14) and the fourth offset gearing (21) and/or the second offset gearing (16) and third offset gearing (19) are arranged in a common gearing housing (22, 23).

4. Motor vehicle according to one of Claims 1 to 3, **characterized in that** the offset gearings (14, 16, 19, 21) are spur gearings.

5. Motor vehicle according to one of Claims 1 to 4, **characterized in that**, to gain free space at steerable front wheels (3), the offset gearing (16, 19) situated in the region of the front axle (15) is arranged so as to be offset in height in relation to the offset gearing (14, 21) situated in the region of the rear axle (13).

6. Motor vehicle according to one of Claims 1 to 5, **characterized in that**, between the first offset gearing (14) and the fourth offset gearing (21), there is arranged an activatable intermediate gearing (24) which acts directly on the axle centre gearing (20) of the adjacent wheel axle (15).

7. Motor vehicle according to Claim 6, **characterized in that** the activatable intermediate gearing (24) is a spur gearing.

8. Motor vehicle according to Claim 6 or 7, **characterized in that** the transmission ratio of the switchable intermediate gearing (24) is configured as a reverse crawler gear.

9. Motor vehicle according to one of Claims 1 to 8, **characterized in that** the drive engine (6) is arranged between the rear wheels (4), and the shift gearbox (7) is arranged between the front wheels (3) of the motor vehicle (1).

## Revendications

1. Véhicule automobile doté d'un entraînement toute roue disposé en direction de l'axe longitudinal (2) du véhicule automobile (1) entre les roues avant (3) et les roues arrière (4), l'occupation de l'espace comprenant un habitacle (5) ainsi qu'un moteur d'entraînement en entrée (6) et une boîte de vitesses (7), le moteur d'entraînement en entrée (6) et la boîte de vitesses (7) étant reliés entre eux de façon séparée suivant un mode de construction transaxe par le biais d'un premier arbre (8) s'étendant en direction de l'axe longitudinal (2) et un deuxième arbre (9) s'étendant également en direction de l'axe longitudinal (2) du véhicule étant prévu pour répartir la force de l'entraînement en entrée entre la boîte de vitesses (7) et les roues (3, 4), **caractérisé par** les caractéristiques suivantes :
a) les deux arbres (8, 9) longent les parois latérales (10, 11) opposées de l'habitacle (5) ;
b) un premier engrenage décalé (14) est prévu pour combler un décalage axial entre l'arbre d'entraînement en sortie (12) du moteur d'entraînement en entrée (6) et le premier arbre (8) et un deuxième engrenage décalé (16) est prévu pour combler un décalage axial entre le premier arbre (8) et la boîte de vitesses (7) ;
c) la boîte de vitesses (7) est reliée à un engrenage centré dans l'axe (18) de l'essieu de roue (13, 15) connexe à la boîte de vitesses (7) par le biais d'un engrenage intermédiaire (17) ainsi que d'un troisième engrenage décalé (19), pour combler un décalage entre le deuxième arbre (9) et l'arbre d'entraînement en sortie de la boîte de vitesses (7) ou de l'engrenage intermédiaire (17) ; et
d) un quatrième engrenage décalé (21) est prévu pour combler un décalage axial entre le deuxième arbre (9) et un engrenage centré dans l'axe (20) de l'essieu du véhicule (13, 15) connexe au moteur d'entraînement en entrée (6).

2. Véhicule automobile selon la revendication 1, **caractérisé en ce que** le premier engrenage décalé (14) et/ou le troisième engrenage décalé (19) sont sélectionnés de façon à permettre une augmentation du nombre de tours du premier arbre (8) et/ou du deuxième arbre (9) par rapport à l'arbre d'entraînement en sortie (12) du moteur d'entraînement en entrée (6) et/ou de la boîte de vitesses (7) et que cette augmentation du nombre de tours est réalisée en marche arrière par le biais du deuxième engrenage décalé (16) et/ou du quatrième engrenage décalé (21).

3. Véhicule automobile selon la revendication 1 ou 2, **caractérisé en ce que** le premier engrenage décalé (14) et le quatrième engrenage décalé (21) et/ou le deuxième engrenage décalé (16) et le troisième engrenage décalé (19) sont disposés dans un carter de boîte de vitesses (22, 23) commun.

4. Véhicule automobile selon l'une quelconque des revendications 1 à 3, **caractérisé en ce que** les engrenages décalés (14, 16, 19, 21) sont des engrenages de roue avant.

5. Véhicule automobile selon l'une quelconque des revendications 1 à 4, **caractérisé en ce que** pour gagner de l'espace libre en cas de roues avant (3) motrices, les engrenages décalés (16, 19) se trouvant dans la zone de l'essieu avant (15) sont décalés en hauteur par rapport aux engrenages décalés (14, 21) se trouvant dans la zone de l'essieu arrière (13).

6. Véhicule automobile selon l'une quelconque des revendications 1 à 5, **caractérisé en ce qu'**un engrenage intermédiaire (24) raccordable est disposé entre le premier engrenage décalé (14) et le quatrième engrenage décalé (21), ledit engrenage intermédiaire agissant directement sur l'engrenage centré dans l'axe (20) de l'essieu de roue (15) connexe.

7. Véhicule automobile selon la revendication 6, **caractérisé en ce que** l'engrenage intermédiaire (24) raccordable est un engrenage de roue avant.

8. Véhicule automobile selon la revendication 6 ou 7, **caractérisé en ce que** la transmission de l'engrenage intermédiaire (24) raccordable est effective lors du passage de la marche arrière.

9. Véhicule automobile selon l'une quelconque des revendications 1 à 8, **caractérisé en ce que** le moteur d'entraînement en entrée (6) est disposé entre les roues arrière (4) et que la boîte de vitesses (7) est disposée entre les roues avant (3) du véhicule automobile (1).
